Europäisches Patentamt

European Patent Office

Office européen des brevets

(11) Veröffentlichungsnummer : **0 166 887**
**B1**

(12) # EUROPÄISCHE PATENTSCHRIFT

(45) Veröffentlichungstag der Patentschrift :
30.09.87

(51) Int. Cl.⁴ : **B 23 B 31/02**

(21) Anmeldenummer : **85104831.4**

(22) Anmeldetag : **20.04.85**

(54) **Vorrichtung zum Schnellwechseln der Aufsatzbacken eines kraftbetätigten Spannfutters.**

(30) Priorität : **18.05.84 DE 3418553**

(43) Veröffentlichungstag der Anmeldung :
**08.01.86 Patentblatt 86/02**

(45) Bekanntmachung des Hinweises auf die Patenterteilung : **30.09.87 Patentblatt 87/40**

(84) Benannte Vertragsstaaten :
**DE FR GB SE**

(56) Entgegenhaltungen :
**DE-B- 2 610 587**
**FR-A- 2 125 100**

(73) Patentinhaber : **Paul Forkardt GmbH & Co. KG**
**Rosenstrasse 44-46**
**D-4000 Düsseldorf 30 (DE)**

(72) Erfinder : **Kempken, Rainer**
**Donaustrasse 3**
**D-4006 Erkrath 2 (DE)**
Erfinder : **Steinberger, Josef**
**Sebastiansweg 30**
**D-4000 Düsseldorf (DE)**
Erfinder : **Ritschel, Johann**
**Leichlinger Strasse 59**
**D-4000 Düsseldorf (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

## Beschreibung

Die Erfindung betrifft eine Vorrichtung zum Schnellwechseln der Aufsatzbacken eines kraftbetätigten Spannfutters mit mehreren, in einem Futterkörper radial beweglich geführten Spannbacken, die jeweils durch eine Grundbacke und eine an der Grundbacke auswechselbar befestigte Aufsatzbacke gebildet sind, welche nach Lösen einer Verriegelung durch eine Relativbewegung gegenüber der Grundbacke von der Grundbacke abnehmbar ist, an der die Aufsatzbacke im Normalzustand in radialer Richtung formschlüssig festgelegt ist und die auf bzw. in ihrer Stirnfläche mit Führungsflächen für entsprechende Gegenflächen der Aufsatzbacken versehen ist, und mit einer aus einer Ruhestellung in eine Wechselstellung vor dem Spannfutter überführbaren Wechselvorrichtung, die mit den Führungsflächen der Grundbacken entsprechenden Führungsschienen versehen ist, die in einem mindestens der Breite der Spannbacken entsprechenden Abstand voneinander angeordnet sind, eine beidseitige Fortsetzung der Führungsflächen derjenigen Grundbacke darstellen, an welche sie in der Wechselstellung angesetzt sind, und auf denen mindestens eine Aufsatzbacke gelagert ist, die mittels eines mit Mitnehmern versehenen Schiebers gegen die jeweils auf der Grundbacke befindliche Aufsatzbacke durch Verschieben austauschbar ist.

Eine Vorrichtung zum Schnellwechseln der Aufsatzbacken eines Kraftbetätigten Spannfutters der voranstehend beschriebenen Art ist aus der DE-PS 2 610 587 bekannt. Bei dieser bekannten Konstruktion ist die Wechselvorrichtung mit einem eingebauten Antrieb für die Schieber ausgestattet, so daß es erforderlich ist, die zwischen einer Ruhestellung und einer Wechselstellung bewegbare Wechselvorrichtung mit Energiezuführungen auszustatten, deren Druckmittel- oder Stromleitungen einerseits die Beweglichkeit der Wechselvorrichtung beschränken und andererseits im Arbeitsraum der Maschine angeordnet werden müssen.

Der Erfindung liegt die Aufgabe zugrunde, eine Vorrichtung der eingangs beschriebenen Art derart weiterzuentwickeln, daß auf einen in die Wechselvorrichtung eingebauten Antrieb verzichtet werden kann, so daß die Schnellwechselvorrichtung von Strom- und Druckmittelzuführungen unabhängig wird.

Die Lösung dieser Aufgabenstellung durch die Erfindung ist dadurch gekennzeichnet, daß die Schieber der Wechselvorrichtung durch eine von außen in die Wechselvorrichtung eingeleitete, von einer Bewegung eines Werkzeuges, Werkzeugträgers oder eines anderen angetriebenen Bauteils der Werkzeugmaschine oder eines dieser zugeordneten Werkstückgreifers abgeleitete Bewegung antreibbar sind.

Mit diesem Vorschlag der Erfindung wird es möglich, die beispielsweise durch einen Werkstückgreifer zwischen Wechselstellung und Ruhestellung bewegbare Wechselvorrichtung durch die Bewegung eines Werkzeuges oder Werkzeugträgers oder eine hieraus abgeleitete Bewegung anzutreiben, so daß nicht nur auf einen in die Wechselvorrichtung eingebauten separaten Antrieb verzichtet werden kann, sondern ein vorhandener Antrieb verwendet wird, dessen Bewegung bereits im Maschinenprogramm enthalten ist. Erfindungsgemäß entfällt somit auch die Notwendigkeit, einen zusätzlichen Antrieb in das Maschinenprogramm aufzunehmen, so daß sich nicht nur die Konstruktion für die Schnellwechselvorrichtung vereinfacht, sondern auch die hierfür notwendige Steuerung an der Maschine.

Gemäß einem bevorzugten Merkmal der Erfindung kann die Bewegung der Schieber von einem Drehantrieb eines Werkzeuges abgeleitet werden, wie er beispielsweise durch im Revolverkopf einer Drehmaschine vorhandene, umlaufende Schrauber gebildet ist. Bei einer alternativen Ausführungsform der Erfindung kann die Bewegung der Schieber von einer Bewegung eines Werkzeugträgers abgeleitet werden, die ohne Schwierigkeiten in das Programm der Werkzeugmaschine aufgenommen werden kann.

Wenn die Schieber der Wechselvorrichtung gemäß einem weiteren bevorzugten Merkmal der Erfindung durch ein gemeinsames Kupplungsglied miteinander verbunden sind, können sie synchron angetrieben werden. Bei einer bevorzugten Ausführungsform ist die Wechselvorrichtung mit einem von einem Drehantrieb eines Werkzeuges antreibbaren Antriebsrad versehen, welches das gemeinsame Kupplungsglied antreibt.

Bei einer alternativen Ausführungsform der Erfindung kann das Kupplungsglied über ein Übertragungselement durch eine Drehbewegung eines Werkzeugrevolvers angetrieben werden. Auch in diesem Fall kann die von der Drehbewegung des Werkzeugträgers abgeleitete Bewegung auf einfache Weise in das Programm der Werkzeugmaschine aufgenommen werden.

Mit der Erfindung wird weiterhin vorgeschlagen, das Kupplungsglied mit mindestens einer Verzahnung zu versehen, in die sowohl das Antriebsrad bzw. ein von diesem angetriebenes Zwischenrad als auch eine an jeden Schieber ausgebildete Gegenverzahnung eingreift, so daß sich eine besonders einfache Konstruktion für den synchronen Antrieb der Schieber ergibt.

Sofern die Bewegung der Schieber von einer Bewegung eines Werkzeugträgers abgeleitet wird, besteht die Möglichkeit, mindestens einen Schieber durch eine lineare Bewegung eines an der Werkzeugmaschine vorhandenen Bauteils anzutreiben. Im einfachsten Fall kann es sich bei diesem Bauteil um einen Druckmittelzylinder handeln, der an der Werkzeugmaschine angeordnet ist. Das Zylindergehäuse kann fest an der Werkzeugmaschine angeordnet sein, wobei eine Kupplung zwischen der Kolbenstange des Druckmittelzylinders und der Wechselvorrichtung durch eine Bewegung der Wechselvorrichtung in die Wechselstellung erfolgt. Alternativ hierzu kann das Gehäuse des Druckmittelzylinders an einem verschiebbaren Teil der Werkzeugmaschine befestigt sein, beispielsweise an einem Werkzeugschlitten. In diesem Fall erfolgt eine Kupplung zwischen der Kolbenstange des Druckmittelzylinders und der Wechselvorrichtung durch eine Bewegung desjenigen Bauteils, welches den Druckmittelzylinder trägt.

Mit der Erfindung wird schließlich vorgeschlagen, als eine lineare Bewegung zum Antrieb der Schieber durchführendes Bauteil einen vorhandenen Werkzeugschlitten zu verwenden. Im Falle einer synchronen Bewegung sämtlicher Schieber der Wechselvorrichtung greift dieses Bauteil in ein Zwischenglied ein, das in geeigneter Weise mit dem sämtlichen Schiebern gemeinsamen Kupplungsglied verbunden ist.

Auf der Zeichnung sind verschiedene Ausführungsbeispiele für die erfindungsgewäße Vorrichtung dargestellt, und zwar zeigen :

Figur 1 einen Längsschnitt durch ein erstes Ausführungsbeispiel der in der Wechselstellung befindlichen Wechselvorrichtung,

Figur 2 eine teilweise geschnittene Stirnansicht der Wechselvorrichtung nach Fig. 1,

Figur 3 eine der Fig. 2 entsprechende, ebenfalls teilweise geschnittene Stirnansicht eines zweiten Ausführungsbeispiels der Wechselvorrichtung,

Figur 4 eine weitere, teilweise geschnittene Stirnansicht eines dritten Ausführungsbeispiels,

Figur 5 eine weitere Ausführungsform anhand einer Stirnansicht, teilweise im Schnitt,

Figur 6 eine teilweise im Schnitt dargestellte Stirnansicht eines fünften Ausführungsbeispiels,

Figur 7 einen Teilschnitt gemäß der Schnittlinie VII-VII in Fig. 6,

Figur 8 einen Längsschnitt durch ein sechstes Ausführungsbeispiel,

Figur 9 eine Stirnansicht zur Ausführungsform nach Fig. 8,

Figur 10 eine alternative Antriebsmöglichkeit für die Ausführung nach Fig. 1 und

Figur 11 eine Abwandlung des Antriebes für die Ausführung nach Fig. 2.

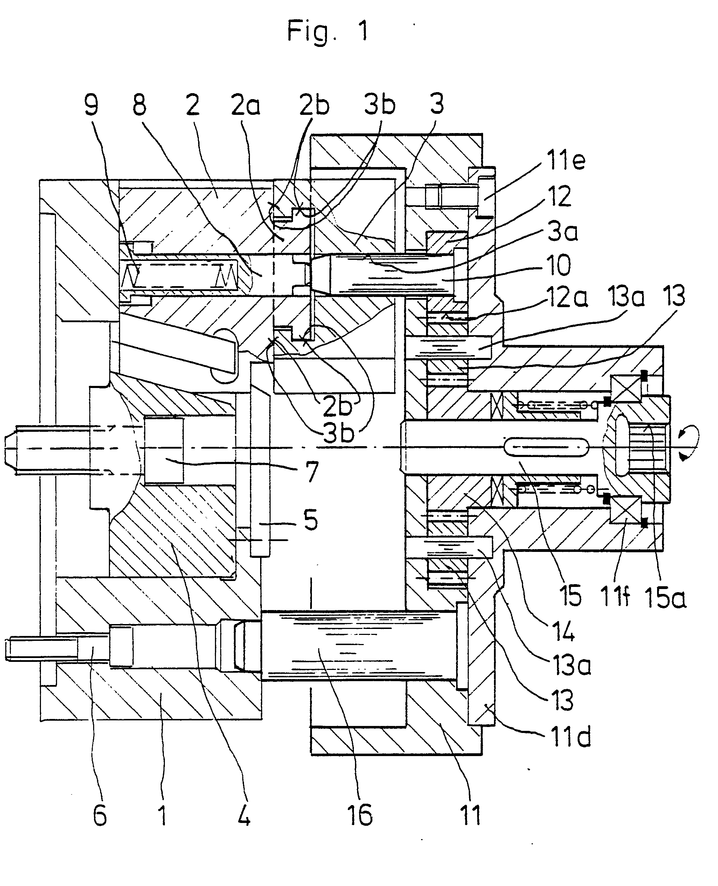

Sämtliche auf den Zeichnungen dargestellten Ausführungsbeispiele der Wechselvorrichtung dienen zum Schnellwechseln der Aufsatzbacken eines kraftbetätigten Spannfutters, von dem eine mögliche Ausführungsform in Fig. 1 dargestellt ist. Dieses Spannfutter weist einen Futterkörper 1 auf, in welchem drei Spannbacken radial beweglich geführt sind. Jede Spannbacke besteht aus einer Grundbacke 2 und einer Aufsatzbacke 3. Die Spannbacken werden gemeinsam durch einen Futterkolben 4 betätigt, der in axialer Richtung beweglich im Futterkörper 1 gelagert ist und durch seine Bewegung eine radiale Verstellung der Spannbacken bewirkt. An der Stirnseite ist der Futterkörper 1 im Bereich des Futterkolbens 4 durch einen Deckel 5 verschlossen. Der Futterkörper 1 wird mittels Futterbefestigungsschrauben 6 an einer Spindel einer nicht dargestellten Werkzeugmaschine befestigt. Der Futterkolben 4 ist mittels einer Zugschraube 7 mit der Kolbenstange einer Kraftbetätigung, beispielsweise eines Druckmittelkolbens verbunden.

An der Stirnfläche der Grundbacken 2 ist ein T-förmiger Vorsprung 2a mit Führungsflächen 2b ausgebildet, die tangential zur Drehachse des Spannfutters verlaufen. Jede Aufsatzbacke 3 ist mit einer dem T-förmigen Vorsprung 2a der Grundbacken 2 entsprechenden Ausnehmung mit Führungsflächen 3b versehen, die sowohl der axialen Lagebestimmung der Aufsatzbacke 3 an der Grundbacke 2 dienen als auch eine radiale Lagebestimmung bewirken, und zwar sowohl in zentrifugaler als auch in zentripetaler Richtung.

Jede Aufsatzbacke 3 weist im Bereich der für den T-förmigen Vorsprung 2a bestimmten Ausnehmung eine Bohrung 3a auf, in welche der Kopf eines Sicherungsbolzens 8 einrasten kann, der parallel zur Drehachse des Spannfutters in jeder Grundbacke 2 angeordnet ist. Dieser Sicherungsbolzen 8 steht unter der Kraft einer Feder 9. Der Kopf des Sicherungsbolzens 8 ist am radial außenliegenden und am radial innenliegenden Umfang (wie aus Fig. 1 zu entnehmen ist) abgeflacht, um an diesen Stellen keine Anlageflächen zu bilden, die eine Überbestimmung der Lage der Aufsatzbacke 3 an der Grundbacke 2 bewirken würden.

Jeder Sicherungsbolzen 8 ist durch einen Stößel 10 entgegen der Kraft seiner Feder 9 in die Grundbacke 2 zurückschiebbar, wenn dieser Stößel 10 in die Bohrung 3a der Aufsatzbacke 3 in axialer Richtung eingeführt wird. Nach dem Zurückdrücken des Sicherungsbolzens 8 kann jede Aufsatzbacke 3 entlang der Führungsflächen 2b und 3b in tangentialer Richtung zur Drehachse des Spannfutters verschoben und somit von der Grundbacke 2 getrennt bzw. auf diese Grundbacke 2 aufgesetzt werden.

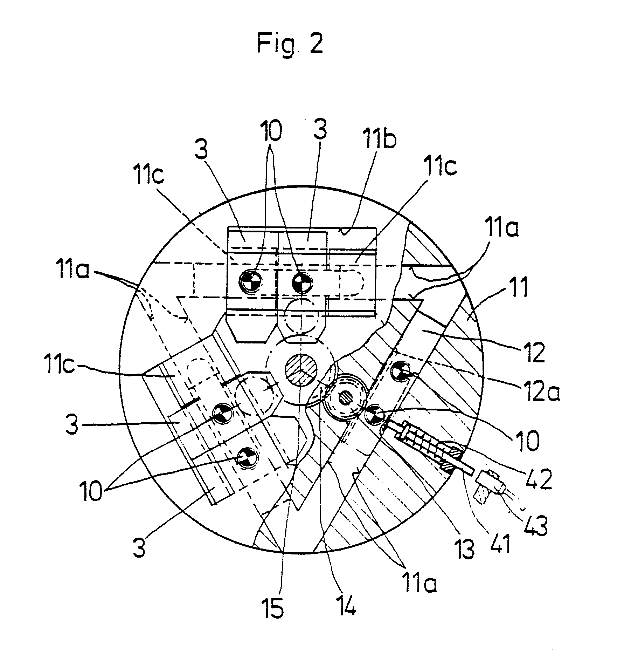

Ein derartiger Wechsel der Aufsatzbacken 3 erfolgt mit Hilfe einer Wechselvorrichtung, deren Grundaufbau anhand des ersten Ausführungsbeispiels nach den Fig. 1 und 2 beschrieben werden soll.

Diese Wechselvorrichtung besitzt einen zylindrischen Tragkörper 11, der mit tangential verlaufenden Führungsnuten 11a für eine der Anzahl der Spannbacken entsprechende Zahl von Schiebern 12 versehen ist. Beim Ausführungsbeispiel besitzt die für ein Dreibackenfutter ausgebildete Wechselvorrichtung drei derartige Schieber 12. Diese tragen mindestens zwei der voranstehend erwähnten Stößel 10, auf denen jeweils eine Aufsatzbacke 3 aufgeschoben ist. Diese Aufsatzbacken 3 befinden sich innerhalb einer Aussparung 11b, in welche seitlich Führungsschienen 11c hineinragen, deren Querschnitt dem T-förmigen Vorsprung 2a der Grundbacken 2 entspricht und auf denen die seitlich dieser Grundbacken 2 befindlichen Aufsatzbacken 3 gelagert sind. Die Führungsflächen dieser T-förmigen Führungsschienen 11c, die in einem mindestens der Breite der Aufsatzbacken 3 entsprechenden Abstand voneinander angeordnet sind, stellen eine beidseitige Fortsetzung der Führungsflächen 2b der Grundbacke 2 dar.

Beim Ausführungsbeispiel nach den Fig. 1 und 2 erfolgt eine synchrone Verschiebung der Schieber 12 in den Führungsnuten 11a des zylindrischen Tragkörpers 11 der Wechselvorrichtung. Zu diesem Zweck sind die Schieber 12 an ihrer der Drehachse zugewandten Unterseite mit einer Verzahnung 12a versehen. In diese Verzahnung 12a jedes Schiebers 12 greift die Verzahnung eines zugehörigen Zwischenrades 13 ein, das auf einem Lagerbolzen 13a im Tragkörper 11 drehbar gelagert ist. Der Antrieb sämtlicher Zwischenräder 13 erfolgt durch ein zentrales Antriebsrad 14, welches auf einer Antriebswelle 15 angeordnet und mit dieser über ein federbelastetes Kupplungsteil kuppelbar ist. Diese Antriebswelle 15 wird von einem Drehantrieb eines Werkzeuges angetrieben, beispielsweise von einem im Revolverkopf der Werkzeugmaschine befindlichen Schrauber. Zu diesem Zweck besitzt die Antriebswelle 15 einen Antriebsmehrkant 15a, in den ein entsprechendes Stück eines Schraubers einführbar ist.

Die Fig. 1 zeigt, daß der zylinderförmige Tragkörper 11 mit einem Lagerdeckel 11d versehen ist, der mittels Deckelschrauben 11e an den Tragkörper 11 angeschraubt ist und das Lager 11f für die Antriebswelle 15 enthält. Um eine exakte Ausrichtung des Tragkörpers 11 zum Futterkörper 1 zu erzielen, sind bei dem in Fig. 1 dargestellten Ausführungsbeispiel Zentrierbolzen 16 im Tragkörper 11 angeordnet, die mit angeschrägten Zentrierstücken in die für die Futterbefestigungsschrauben 6 vorgesehenen Bohrungen eingreifen und auf diese Weise die exakte Ausrichtung des Tragkörpers 11 zum Futterkörper 1 bewirken und gleichzeitig die Reaktionskräfte beim Antrieb der Schieber 12 aufnehmen.

Wenn die in den Fig. 1 und 2 dargestellte Wechselvorrichtung in axialer Richtung an den Futterkörper 1 des Spannfutters angesetzt wird, beispielsweise mittels eines der Werkzeugmaschine zugeordneten Greifers, treten die Stößel 10 in die Bohrungen 3a der Aufsastzbacken 3 ein. Sobald die Wechselvorrichtung die Wechselstellung erreicht hat, die beispielsweise über eine Anschlagfläche an den Zentrierbolzen 16 definiert ist, haben die Stößel 10 die Sicherungsbolzen 8 in den Grundbacken 2 derart entgegen der Kraft der Feder 9 zurückgedrückt, daß sie außer Eingriff mit den Aufsatzbacken 3 getreten sind. Die auf den Grundbacken 2 vorhandenen Aufsatzbacken 3 können somit durch eine Verschiebung der Schieber 12 gegen Aufsatzbacken 3 ausgetauscht werden, die sich auf dem anderen Stößel 10 der Schieber 12 befinden.

Der Antrieb der Schieber 12 erfolgt hierbei durch ein an der Werkzeugmaschine vorhandenes, drehend angetriebenes Werkzeug, welches in den Antriebsmehrkant 15a der Antriebswelle 15 eingeführt wird. Eine Drehbewegung dieses Werkzeuges bewirkt dementsprechend eine Rotation des Antriebsrades 14, dessen Drehbewegung über die Zwischenräder 13 und die Verzahnung 12a auf die Schieber 12 synchron übertragen wird.

Sobald die Schieber 12 etwa um die Breite der Aufsatzbacken 3 verschoben und hierdurch die neuen Aufsatzbacken 3 auf die Grundbacken 2 aufgeschoben worden sind, wird der Tragkörper 11 der Wechselvorrichtung in axialer Richtung vom Futterkörper 1 abgezogen. Hierbei treten die Sicherungsbolzen 8 in die Bohrungen 3a der neu aufgesetzten Aufsatzbacken 3 ein, so daß diese für die anschließende Spannaufgabe sicher an den Grundbacker 2 festgehalten werden.

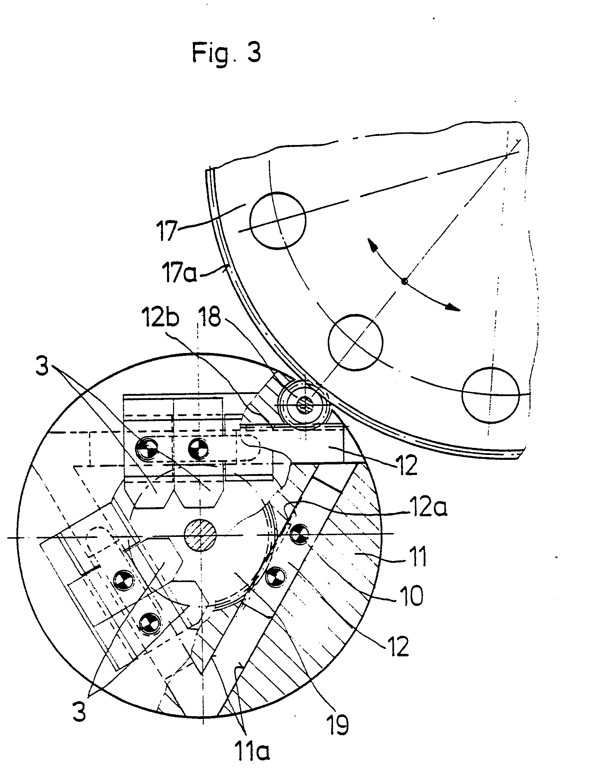

Beim zweiten Ausführungsbeispiel nach Fig. 3 wird die Drehbewegung eines Werkzeugträgers für den Antrieb der Schieber 12 herangezogen. Zu diesem Zweck ist der Revolver 17 mit einer Umfangsverzahnung 17a versehen. Sobald die Wechselvorrichtung, die in ihren wesentlichen Teilen der voranstehend beschriebenen ersten Ausführungsform entspricht, an das Spannfutter angesetzt worden ist, wird der Revolver 17 an die in der Wechselstellung befindliche Wechselvorrichtung herangeführt. Er greift dann mit seiner Umfangsverzahnung 17a in die Verzahnung eines Antriebsritzels 18 ein, das drehbar im Tragkörper 11 der Wechselvorrichtung gelagert ist und seinerseits in eine Antriebsverzahnung 12b eines Schiebers 12 eingreift. Eine Drehbewegung des Revolvers 17 hat somit unter Zwischenschaltung des Antriebsritzels 18 eine Verschiebebewegung eines Schiebers 12 zur Folge. Die beiden anderen Schieber 12 werden dadurch synchron mit dem direkt angetriebenen Schieber 12 verstellt, daß in die Verzahnungen 12a sämtlicher Schieber 12 ein gemeinsames Kupplungsglied eingreift, das beim Ausführungsbeispiel nach Fig. 3 durch ein zentrales Kupplungszahnrad 19 gebildet wird.

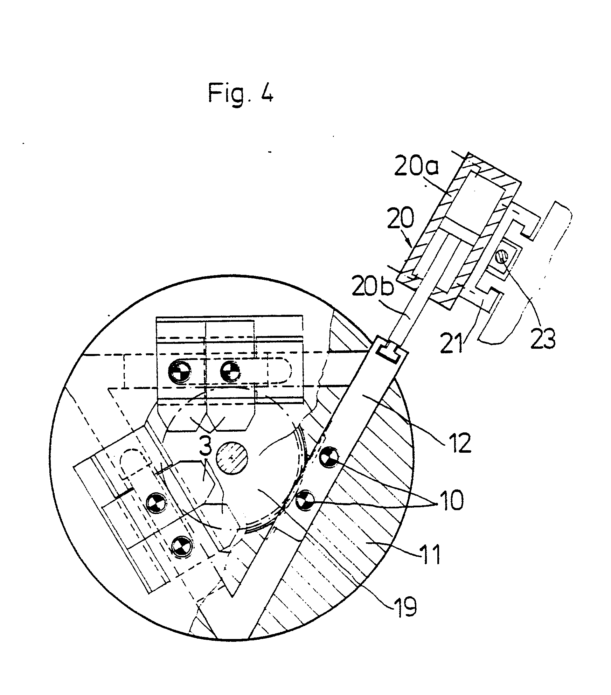

Auch bei der dritten Ausführungsform nach Fig. 4 erfolgt der synchrone Antrieb der Schieber 12 mit Hilfe eines Kupplungszahnrades 19 und durch den Antrieb nur eines Schiebers 12 mit Hilfe eines an der Werkzeugmaschine vorhandenen Bauteils, das eine lineare Bewegung ausführt. Dieses Bauteil wird gemäß Fig. 4 durch einen Druckmittelzylinder 20 gebildet, dessen Zylindergehäuse 20a an einem Schlitten 21 der Werkzeugmaschine befestigt ist. Bei diesem Schlitten 21 kann es sich entweder um einen vorhandenen Werkzeugschlitten oder um einen Sonderschlitten handeln, der parallel zur Drehachse des Spannfutters auf einer Führung 22 der Werkzeugmaschine mit Hilfe einer Spindel 23 verschiebbar ist. Die aus dem Zylindergehäuse 20a herausgeführte Kolbenstange 20b ist mit einem Kupplungsstück versehen, das in eine entsprechende Aussparung eines Schiebers 12 eingreift, wie dies in Fig. 4 dargestellt ist.

Sobald die Wechselvorrichtung in die Wechselstellung überführt worden ist, wird der Druckmittelzylinder 20 mit Hilfe des Schlittens 21 derart verschoben, daß die Kupplungsteile zwischen Kolbenstange 20b und Schieber 12 ineinandergreifen. Durch eine Betätigung des Druckmittelzylinders 20 erfolgt anschließend eine lineare Bewegung der Kolbenstange 20b und damit des unmittelbar angetriebenen Schiebers 12. Durch diese von außen in die Wechselvorrichtung eingeleitete Bewegung wird der voranstehend beschriebene Wechsel der Aufsatzbacken 3 vorgenommen. Sobald dieser Schnellwechsel durchgeführt worden ist, wird die Kolbenstange 20b mit Hilfe des Schlittens 21 außer Eingriff mit dem Schieber 12 gefahren. Danach wird die Wechselvorrichtung in die Ruhestellung überführt.

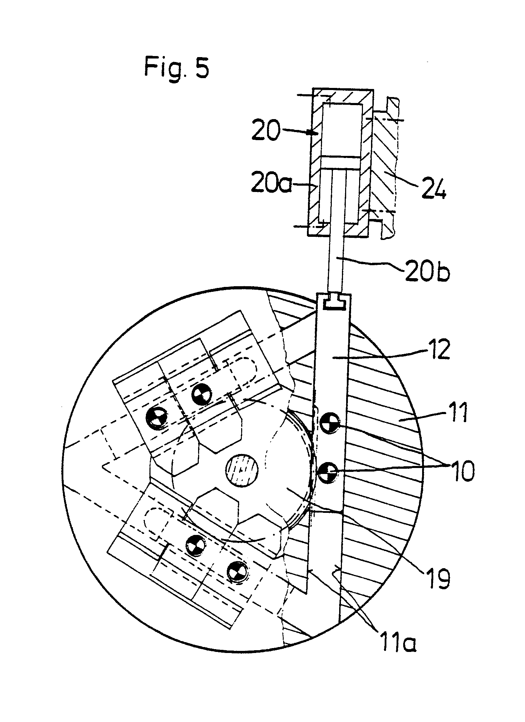

Das vierte Ausführungsbeispiel nach Fig. 5 stimmt im wesentlichen mit der Ausführungsform nach Fig. 4 überein. Im Unterschied zu dieser Ausführung ist der Druckmittelzylinder 20 in diesem Fall jedoch fest am Bett 24 oder einem anderen ortsfesten Teil der Werkzeugmaschine befestigt. Das Kuppeln zwischen der Kolbenstange 20b und dem unmittelbar angetriebenen Schieber 12 erfolgt beim axialen Überführen der Wechselvorrichtung in deren Wechselstellung, wozu es erforderlich ist, einerseits das Spannfutter und damit die Wechselvorrichtung durch eine Punktstillsetzung in eine bestimmte Stellung zu überführen und andererseits die Kolbenstange 20b beispielsweise durch Endschalter in eine bestimmte Stellung auszufahren, in der beim axialen Ansetzen der Wechselvorrichtung an das Spannfutter eine Kupplung zwischen Schieber 12 und Kolbenstange 20b erfolgt.

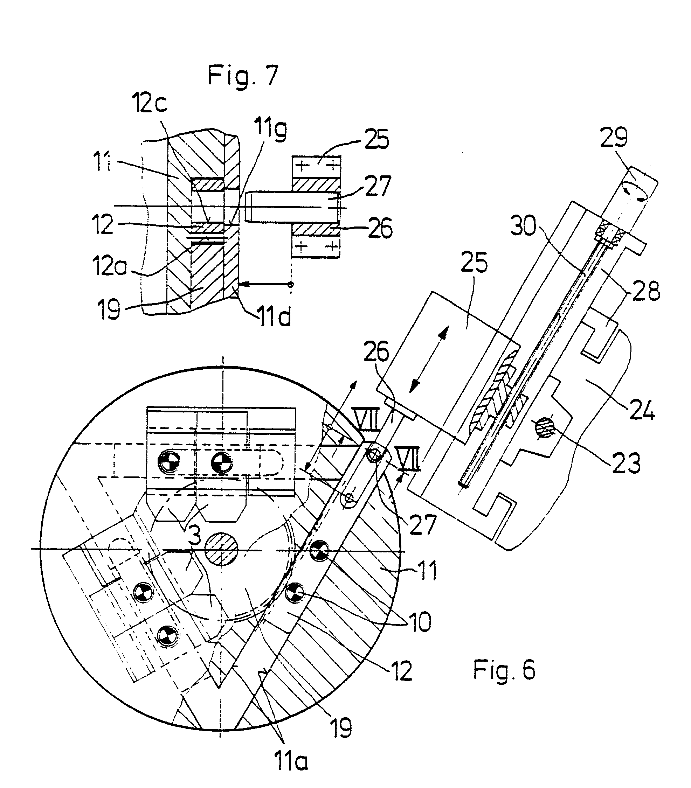

Auch beim fünften Ausführungsbeispiel nach den Fig. 6 und 7 sind die Schieber 12 durch ein Kupplungszahnrad 19 miteinander gekuppelt. Der Antrieb einer dieser Schieber 12 erfolgt bei dieser Ausführungsform durch die lineare Bewegung eines Quersupportes 25, der mit einem Kupplungsstößel 26 versehen ist. Dieser Kupplungsstößel 26 trägt einen seitlich hervorstehenden Kupplungsbolzen 27, der in eine Kupplungsbohrung 12c in einem der Schieber 12 einführbar ist.

Wie Fig. 6 erkennen läßt, ist der Quersupport 25 mit dem Kupplungsstößel 26 quer zur Drehachse des Spannfutters auf einem Längsschlitten 28 verschiebbar. Diese Querverschiebung erfolgt beim Ausführungsbeispiel durch einen Schrittmotor 29 mit Hilfe einer Spindel 30. Auch für die lineare Bewegung des Längsschlittens 28 am Bett 24 der Werkzeugmaschine dient eine Spindel 23.

Sobald sich die Wechselvorrichtung in der Wechselstellung vor dem Spannfutter befindet, wird mit Hilfe des Längsschlittens 28 der Quersupport 25 in eine Stellung verfahren, in der der Kupplungsbolzen 27 gemäß Fig. 7 vor die Kupplungsbohrung 12c des Schiebers 12 überführbar ist. Die Ausrichtung des Kupplungsbolzens 27 erfolgt hierbei mit Hilfe des Schrittmotors 29. Anschließend wird mit Hilfe der Spindel 23 der Längsschlitten 28 parallel zur Drehachse des Spannfutters verfahren, so daß der Kupplungsbolzen 27 in die Kupplungsbohrung 12c des Schiebers 12 eintritt. Durch den Schrittmotor 29 wird über die Spindel 30 anschließend eine lineare Verstellbewegung des Quersupportes 25 erzeugt, die eine synchrone Verstellbewegung aller drei Schieber 12 zur Folge hat, um den voranstehend beschriebenen Wechsel der Aufsatzbacken 3 durchzuführen. Der in Fig. 7 erkennbare Lagerdeckel 11d des Tragkörpers 11 ist mit einem Schlitz 11g versehen, um die lineare Bewegung des Kupplungsbolzens 27 zu ermöglichen.

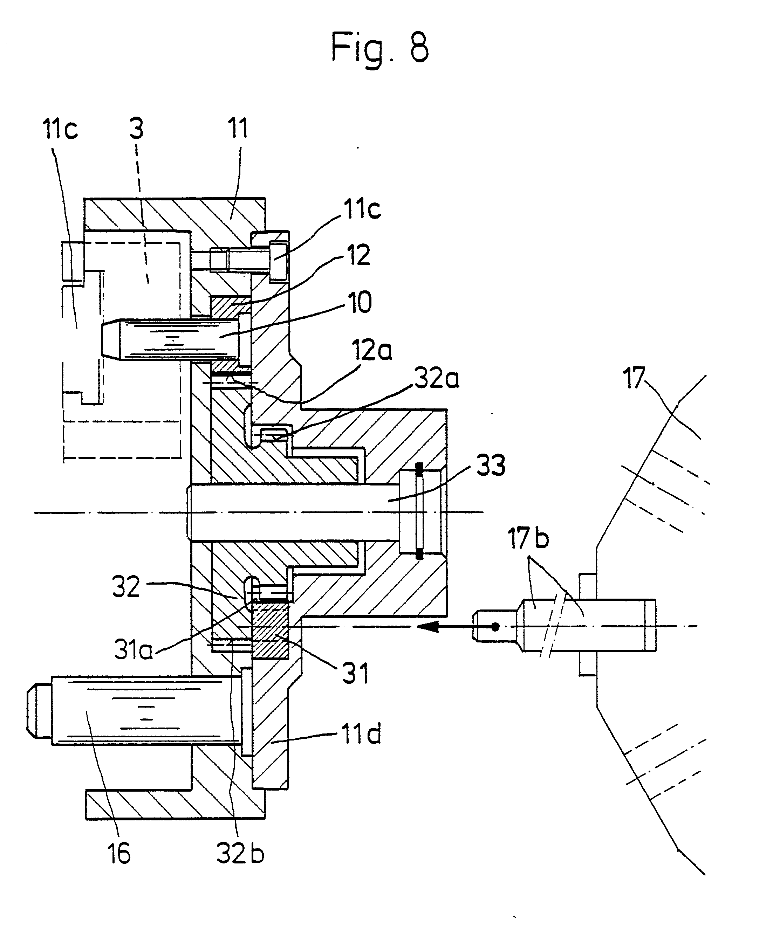

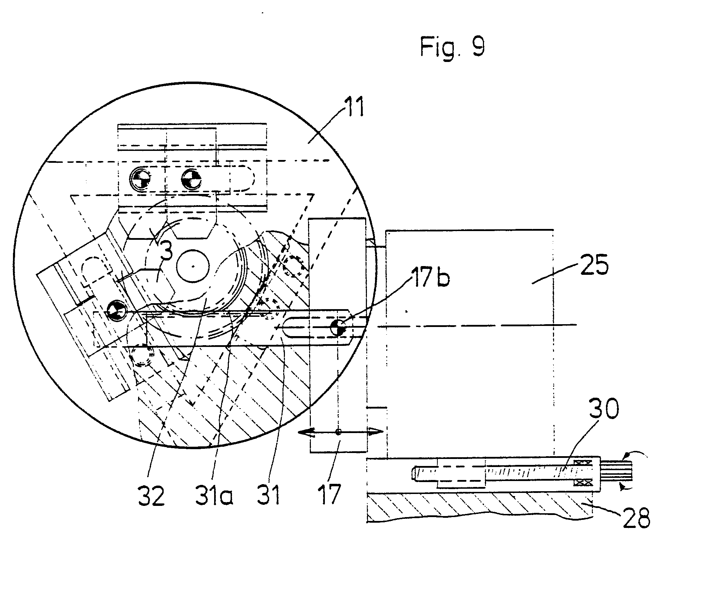

Das sechste Ausführungsbeispiel nach den Fig. 8 und 9 zeigt wiederum eine Wechselvorrichtung, deren Schieber durch die lineare Bewegung eines Werkzeugträgers angetrieben werden. Als Werkzeugträger wird wiederum ein Werkzeuge tragender Revolver 17 verwendet, der gemäß Fig. 8 mit einem Kupplungsbolzen 17b versehen ist. Dieser Kupplungsbolzen 17b steht aus der Umfangsfläche des Revolvers 17 hervor, wie insbesondere Fig. 8 erkennen läßt. Der Revolver 17 ist in bekannter Weise an einem Quersupport 25 der Werkzeugmaschine drehbar gelagert, wobei dieser Quersupport 25 mit Hilfe einer Spindel 30 auf einem Längsschlitten 26 rechtwinklig zur Drehachse des Spannfutters verfahrbar ist, wie der Doppelpfeil in Fig. 9 zeigt.

Nach einer Ausrichtung des Längsschlittens 28 relativ zu der in der Wechselstellung befindlichen Wechselvorrichtung erfolgt eine Querverschiebung des Revolvers 17 mit Hilfe der Spindel 30, so daß deren Kupplungsbolzen 17b in eine entsprechende Ausnehmung eines Antriebsschiebers 31 einrastet, der wie die Schieber 12 in tangentialen Führungen des Tragkörpers 11 verschiebbar ist. Dieser Antriebsschieber 31 besitzt eine zahnstangenartige Verzahnung 31a, mit der er in die Antriebsverzahnung 32a eines doppelt verzahnten Kupplungsrades 32 eingreift, das auf einer Achse 33 im Lagerdeckel 11d des Tragkörpers 11 frei drehbar gelagert ist. Über eine Abtriebsverzahnung 32b greift dieses als Kupplungsglied dienende Kupplungsrad 32 in die Verzahnung 12a der Schieber 12 ein, so daß eine lineare Bewegung des Antriebsschiebers 31 eine entsprechende lineare Bewegung sämtlicher Schieber 12 zur Folge hat, wobei die jeweilige Bewegungsgröße durch die Unterschiede zwischen der Antriebsverzahnung 32a und der Abtriebsverzahnung 32b übersetzt wird. Auch bei dieser Ausführungsform wird somit die Bewegung der Schieber durch eine von außen in die Wechselvorrichtung eingeleitete, von einer Bewegung eines Werkzeugträgers abgeleitete lineare Bewegung erzeugt.

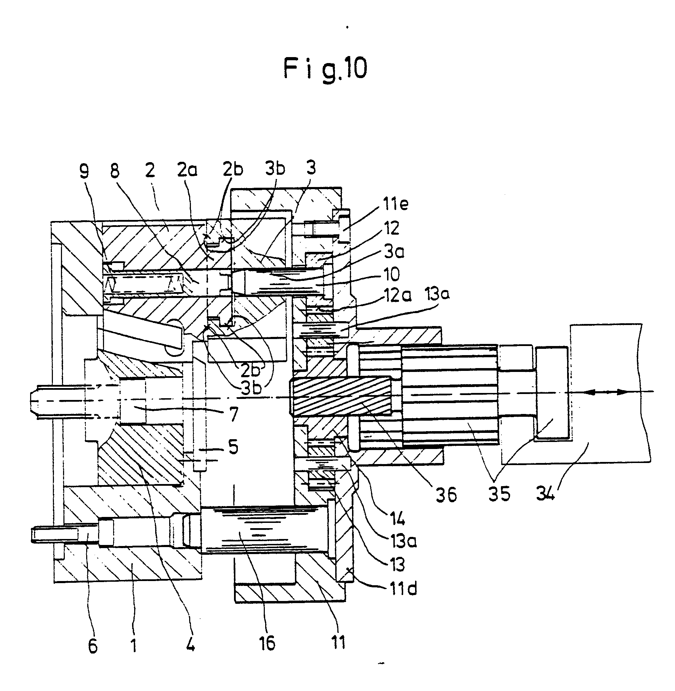

Das weitere Ausführungsbeispiel nach Fig. 10 entspricht in seinem Grundaufbau der Ausführungsform nach Fig. 1. Während hier jedoch ein Drehantrieb unmittelbar in das drehbar gelagerte Antriebsrad 14 eingeleitet wird, zeigt Fig. 10 eine Ausführungsform, bei der das zentrale Antriebsrad 14 durch eine lineare Bewegung eines Bauteils 34 angetrieben wird. Zu diesem Zweck greift das Bauteil 34 in ein Zwischenglied 35 ein, das in Richtung der Drehachse des Spannfutters verschiebbar im Lagerdeckel 11d geführt und mit einem Steilgewinde 36 versehen ist, welches in ein entsprechendes Gewinde in der zentralen Ausnehmung des Antriebsrades 14 eingreift. Bei dieser Ausführungsform hat somit die hin- und hergehende lineare Bewegung des Bauteils 34 eine drehende Bewegung des Antriebsrades 14 zur Folge. Die lineare Antriebsbewegung kann beispielsweise durch ein in der Reitstockpinole befindliches Bauteil erzeugt werden. Alternativ hierzu ist es möglich, die Bewegung durch einen der Werkzeugmaschine zugeordneten Werkstückgreifer zu erzeugen.

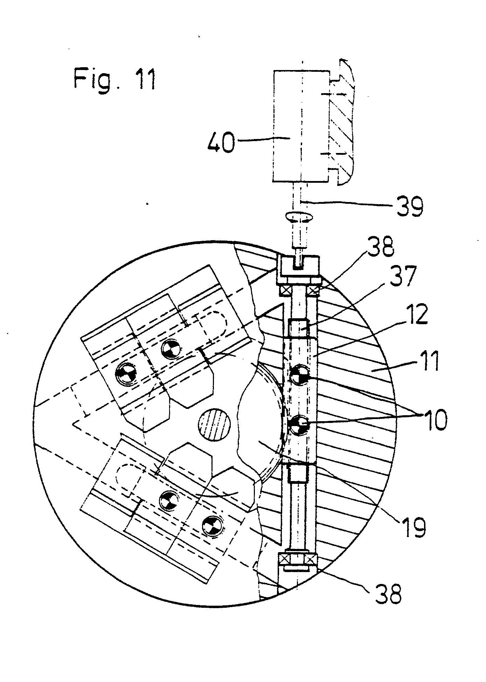

In Fig. 11 ist schließlich eine alternative Antriebsmöglichkeit für eine Ausführungsform dargestellt, wie sie bereits mit Bezug auf die Ausführungsform nach Fig. 2 erläutert worden ist. Bei der Ausführungsform nach Fig. 11 ist in einem der Schieber 12 eine Antriebsspindel 37 angeordnet, die in axialer Richtung unverschiebbar durch Lager 38 im Tragkörper 11 festgelegt ist. Diese Antriebsspindel 37 greift mit ihrem Außengewinde in ein entsprechendes Innengewinde des Schiebers 12 ein, so daß eine Drehbewegung der in axialer Richtung festgelegten Antriebsspindel 37 eine axiale Verschiebebewegung des Schiebers 12 zur Folge hat. Über das Kupplungszahnrad 19 werden dann in der bezüglich Fig. 2 bereits beschriebenen Weise die beiden anderen Schieber 12 mitgenommen.

Der Antrieb der Antriebsspindel 37 geschieht beim Ausführungsbeispiel nach Fig. 11 durch die Drehbewegung einer Welle 39, die mittels eines entsprechenden Kupplungsstückes in ein Gegenstück der Antriebsspindel 37 eingreift. Bei der Welle 39 kann es sich beispielsweise um ein Teil eines motorischen Antriebes 40 handeln, wie er an Werkzeugmaschinen beispielsweise für Fräser vorhanden ist.

Um die jeweilige Stellung der Schieber 12 zu überwachen, kann gemäß Fig. 2 eine Überwachungsvorrichtung vorgesehen sein. Bei dem in Fig. 2 dargestellten Ausführungsbeispiel besteht diese Überwachungsvorrichtung aus einem Taststift 41, der rechtwinklig zur Bewegungsrichtung des Schiebers 12 im Tragkörper 11 verschiebbar gelagert ist und mit seinem radial innenliegenden Ende in eine keilförmige Aussparung des Schiebers 12 eingreift. Um diesen Eingriff sicherzustellen, ist der Taststift 41 durch eine Feder 42 belastet. Die Stellung dieses Taststiftes 41 wird durch einen Sensor 43 abgetastet, der an einem ortsfesten Teil der Werkzeugmaschine angeordnet ist. Über diesen Sensor 43 kann festgestellt werden, ob sich der Schieber 12 in der in Fig. 2 eingezeichneten Lage befindet, in welcher der Taststift 41 mit einer maximalen Länge aus dem Tragkörper 11 herausragt, oder ob sich der Schieber 12 in der anderen Endstellung befindet, in welcher der Taststift 41 durch die Feder 42 tiefer in den Tragkörper 11 eingezogen ist. Mit Hilfe der voranstehend beschriebenen Vorrichtung ist eine Überwachung der Stellung der Schieber 12 und damit eine Überwachung möglich, welche Backen sich auf dem Spannfutter und welche sich in der Wechselvorrichtung befinden.

Bezugszeichenliste :

1 Futterkörper
2 Grundbacke
2a Vorsprung
2b Führungsfläche

3 Aufsatzbacke
3a Bohrung
3b Führungsfläche
4 Futterkolben
5 Deckel
6 Futterbefestigungsschraube
7 Zugschraube
8 Sicherungsbolzen
9 Feder
10 Stößel
11 Tragkörper
11a Führungsnut
11b Aussparung
11c Führungsschiene
11d Lagerdeckel
11e Deckelschraube
11f Lager
11g Schlitz
12 Schieber
12a Verzahnung
12b Antriebsverzahnung
12c Kupplungsbohrung
13 Zwischenrad
13a Lagerbolzen
14 Antriebsrad
15 Antriebswelle
15a Antriebsmehrkant
16 Zentrierbolzen
17 Revolver
17a Umfangsverzahnung
17b Kupplungsbolzen
18 Antriebsritzel
19 Kupplungszahnrad
20 Druckmittelzylinder
20a Zylindergehäuse
20b Kolbenstange
21 Schlitten
22 Führung
23 Spindel
24 Bett
25 Quersupport
26 Kupplungsstößel
27 Kupplungsbolzen
28 Längsschlitten
29 Schrittmotor
30 Spindel
31 Antriebsschieber
31a Verzahnung
32 Kupplungsrad
32a Antriebsverzahnung
32b Abtriebsverzahnung
33 Achse
34 Bauteil
35 Zwischenglied
36 Steilgewinde
37 Antriebsspindel
38 Lager
39 Welle
40 Antrieb
41 Taststift
42 Feder
43 Sensor

**Patentansprüche**

1. Vorrichtung zum Schnellwechseln der Aufsatzbacken (3) eines kraftbetätigten Spannfutters mit mehreren ih einem Futterkörper (1) radial beweglich geführten Spannbacken, die jeweils durch eine Grundbacke und eine an der Grundbacke auswechselbar befestigte Aufsatzbacke gebildet sind, welche nach Lösen einer Verriegelung durch eine Relativbewegung gegenüber der Grundbacke von der Grundbacke abnehmbar ist, an der die Aufsatzbacke im Normalzustand in radialer Richtung formschlüssig festgelegt ist und die auf bzw. in ihrer Stirnfläche mit Führungsflächen (3b) für entsprechende Gegenflächen (2b) der Aufsatzbacken versehen ist, und mit einer aus einer Ruhestellung in eine Wechselstellung vor dem Spannfutter überführbaren Wechselvorrichtung, die mit den Führungsflächen der Grundbacken entsprechenden Führungsschienen (11c) versehen ist, die in einem mindestens der Breite der Spannbacken entsprechenden Abstand voneinander angeordnet sind, eine beidseitige Fortsetzung der Führungsflächen derjenigen Grundbacke darstellen, an welche sie in der Wechselstellung angesetzt sind, und auf denen mindestens eine Aufsatzbacke gelagert ist, die mittels eines mit Mitnehmern versehenen Schiebers (12) gegen die jeweils auf der Grundbacke befindliche Aufsatzbacke durch Verschieben austauschbar ist, dadurch gekennzeichnet, daß die Schieber (12) durch eine von außen in die Wechselvorrichtung eingeleitete, von einer Bewegung eines Werkzeuges, Werkzeugträgers oder eines anderen angetriebenen Bauteils der Werkzeugmaschine oder eines dieser zugeordneten Werkstückgreifers abgeleitete Bewegung antreibbar sind.

2. Vorrichtung nach Anspruch 1, dadurch gekennzeichnet, daß die Bewegung der Schieber (12) von einem Drehantrieb eines Werkzeuges ableitbar ist.

3. Vorrichtung nach Anspruch 1, dadurch gekennzeichnet, daß die Bewegung der Schieber (12) von einer Bewegung eines Werkzeugträgers (17) ableitbar ist.

4. Vorrichtung nach Anspruch 1 oder 2, dadurch gekennzeichnet, daß die Schieber (12) durch ein gemeinsames Kupplungsglied (14, 19, 32) miteinander verbunden sind.

5. Vorrichtung nach Anspruch 4, dadurch gekennzeichnet, daß die Wechselvorrichtung mit einem von einem Drehantrieb eines Werkzeuges antreibbaren Antriebsrad (14) versehen ist, das sie Schieber (12) bzw. das Kupplungsglied (19) antreibt.

6. Vorrichtung nach Anspruch 3 und 4, dadurch gekennzeichnet, daß das Kupplungsglied (19) über ein Übertragungselement (18) durch eine Drehbewegung eines Werkzeugrevolvers (17) antreibbar ist.

7. Vorrichtung nach Anspruch 4 und 5, dadurch gekennzeichnet, daß das Kupplungsglied (32) mit mindestens einer Verzahnung (32a, 32b) versehen ist, in die sowohl das Antriebsglied bzw. ein von diesem angetriebenes Zwischenglied (31) als auch eine an jedem Schieber (12) ausgebildete Gegenverzahnung· (12a) eingreift.

8. Vorrichtung nach Anspruch 3, dadurch gekennzeichnet, daß mindestens ein Schieber (12) durch eine lineare Bewegung eines an der Werkzeugmaschine vorhandenen Bauteils (17, 20, 25) antreibbar ist.

9. Vorrichtung nach Anspruch 8, dadurch gekennzeichnet, daß das Bauteil als Druckmittelzylinder (20) ausgebildet ist, der an der Werkzeugmaschine oder an einem dieser zugeordneten Werkstückgreifer angeordnet ist.

10. Vorrichtung nach Anspruch 8, dadurch gekennzeichnet, daß das Bauteil durch einen vorhandenen Schlitten (25) der Werkzeugmaschine gebildet ist.

11. Vorrichtung nach Anspruch 10, dadurch gekennzeichnet, daß das durch einen Schlitten (25) angetriebene Bauteil (31) in ein mit dem Kupplungsglied (17b) verbundenes Zwischenglied (32) eingreift.

12. Vorrichtung nach mindestens einem der Ansprüche 1 bis 11, dadurch gekennzeichnet, daß die Stellung des Schieber (12) überwacht ist.

**Claims**

1. A mechanism for the rapid change of the interchangeable jaws (3) of a power-actuated chuck comprising a plurality of jaws guided for radial movement in a chuck body (1), said jaws each being formed by a basic jaw and an interchangeable jaw interchangeably secured on the basic jaw and removable therefrom by a relative movement in relation to the basic jaw after release of a locking system, the interchangeable jaw being fixed positively to the basic jaw in the radial direction in the normal condition, guide surfaces (3b) for corresponding co-acting surfaces (2b) of the basic jaw, and comprising a change mechanism which can be transferred from an inoperative position into a change position in front of the chuck and which is provided with guide rails (11c) corresponding to the guide surfaces of the basic jaws, said rails being disposed with a mutual spacing corresponding at least to the width of the jaws and constituting a continuation of the guide surfaces on both sides of that basic jaw which they engage in the change position, at least one interchangeable jaw being mounted on said rails and being adapted to replace the interchangeable jaw on the basic jaw at any particular time by displacement by means of a slide (12) provided with drivers, characterised in that the slides (12) are drivable by a movement introduced into the change mechanism from the exterior and derived from a movement of a tool, tool-holder or some other driven part of the machine tool or a workholder associated therewith.

2. A mechanism according to claim 1, characterised in that the movement of the slides (12) is adapted to be derived from a rotary drive of a tool.

3. A mechanism according to claim 1, characterised in that the movement of the slides (12) is adapted to be derived from a movement of a tool holder (17).

4. A mechanism according to claim 1 or 2, characterised in that the slides (12) are interconnected by a common coupling member (14, 19, 32).

5. A mechanism according to claim 4, characterised in that the change mechanism is provided with a drive wheel (14) adapted to be driven from a rotary drive of a tool and which drives the slides (12) of coupling element (19).

6. A mechanism according to claims 3 and 4, characterised in that the coupling element (19) is adapted to be driven by a rotary movement of a tool turred (17) via a transmission element (18).

7. A mechanism according to claims 4 and 5, characterised in that the coupling element (32) is provided with at least one toothing (32a, 32b) in which there engage both the drive element and an intermediate element (31) driven by the same, and also a companion toothing (12a) formed on each slide (12).

8. A mechanism according to claim 3, characterised in that at least one slide (12) is adapted to be driven by a linear movement of a component (17, 20, 25) present on the machine tool.

9. A mechanism according to claim 8, characterised in that the component is in the form of a pressure medium cylinder (20) disposed on the machine tool or on a work-holder associated therewith.

10. A mechanism according to claim 8, characterised in that the component is formed by a carriage (25) present on the machine tool.

11. A mechanism according to claim 10, characterised in that the component (31) driven by a carriage (25) engages in an intermediate element (32) connected to the coupling element (17b).

12. A mechanism according to at least one of claims 1 to 11, characterised in that the position of the slides (12) is monitored.

## Revendications

1. Dispositif pour le changement rapide des mors rapportés (3) d'un mandrin de serrage commandé comportant plusieurs mors de serrage guidés de façon mobile, radialement, dans un corps de mandrin (1) ; et se composant chacun d'une semelle et d'un mors rapporté monté de façon interchangeable sur la semelle, chaque mors rapporté pouvant être retiré de la semelle après déblocage d'un système de verrouillage et après avoir effectué un mouvement relatif par rapport à la semelle, sur laquelle le mors rapporté est à l'état normal maintenu en direction radiale avec liaison par forme, la semelle étant munie, sur ou dans sa face frontale, de surfaces de guidage (3b) pour des surfaces conjuguées correspondantes (2b) des mors rapportés, et comportant un dispositif de changement pouvant être transféré d'une position de repos dans une position de changement, devant le mandrin de serrage, ce dispositif étant pourvu de glissières de guidage (11c) correspondant aux surfaces de guidage des semelles, ces glissières étant disposées à une distance mutuelle au moins égale à la largeur des mors de serrage, en constituant un prolongement des deux côtés des surfaces de guidage des semelles sur lesquelles elles sont appliquées dans la position de changement, au moins un mors rapporté étant monté sur ces glissières, ce mors pouvant être échangé, par coulissement, avec le mors se trouvant sur la semelle, au moyen d'un coulisseau (12) muni d'entraîneurs, caractérisé en ce que les coulisseaux (12) peuvent être entraînés par un mouvement introduit de l'extérieur dans le dispositif de changement et repris du mouvement d'un outil, d'un porte-outil ou d'un autre élément entraîné de la machine-outil, ou encore d'une pince de manipulation de pièce associée à cette machine.

2. Dispositif selon la revendication 1, caractérisé en ce que le mouvement des coulisseaux (12) peut être repris d'une commande rotative d'un outil.

3. Dispositif selon la revendication 1, caractérisé en ce que le mouvement des coulisseaux (12) peut être repris d'un mouvement d'un porte-outil (17).

4. Dispositif selon la revendication 1 ou 2, caractérisé en ce que les coulisseaux (12) sont liés entre eux par un organe d'accouplement commun (14, 19, 32).

5. Dispositif selon la revendication 4, caractérisé en ce que le dispositif de changement est muni d'une roue d'entraînement (14) pouvant être commandée par la commande de rotation d'un outil, cette roue entraînant les coulisseaux (12) ou l'organe d'accouplement (19).

6. Dispositif selon les revendications 3 et 4, caractérisé en ce que l'organe d'accouplement (19) peut être entraîné, par l'intermédiaire d'un élément de transmission (18) par le mouvement de rotation d'un revolver à outils (17).

7. Dispositif selon les revendications 4 et 5, caractérisé en ce que l'organe d'accouplement (32) est muni d'au moins une denture (32a, 32b), dans laquelle engrène l'organe d'entraînement ou un organe intermédiaire (31) entraîné par celui-ci ainsi qu'une denture conjuguée (12a) réalisée sur chaque coulisseau (12).

8. Dispositif selon la revendication 3, caractérisé en ce qu'au moins un coulisseau (12) peut être entraîné par un mouvement linéaire d'un élément (17, 20, 25) existant sur la machine-outil.

9. Dispositif selon la revendication 8, caractérisé en ce que l'élément est constitué en tant que vérin à fluide sous pression (20) disposé sur la machine-outil ou sur une pince de manipulation de pièce associée à celle-ci.

10. Dispositif selon la revendication 8, caractérisé en ce que l'élément est constitué par un chariot existant (25) de la machine-outil.

11. Dispositif selon la revendication 10, caractérisé en ce que l'élément (31) entraîné par un chariot (25) engrène dans un organe intermédiaire (32) relié à l'organe d'accouplement (17b).

12. Dispositif selon au moins l'une des revendications 1 à 11, caractérisé en ce que la position des coulisseaux (12) est contrôlée.

## Fig. 1

## Fig. 2

Fig. 3

Fig. 4

Fig. 5

Fig. 7

Fig. 6

# Fig. 8

Fig. 9

# F i g.10

Fig. 11